# EUROPÄISCHE PATENTSCHRIFT

(11) **EP 0 886 110 B1**
(45) Veröffentlichungstag und Bekanntmachung des Hinweises auf die Patenterteilung: **11.08.2004**
(21) Anmeldenummer: 98106389.4
(22) Anmeldetag: 08.04.1998
(51) Int. Cl.: F24D 19/10

(54) **Verfahren zur Brauchwasserbereitstellung in einem kombinierten System**
Method for preparing sanitary water in a mixed system
Méthode pour préparer l'eau sanitaire dans un système mixte

(30) Priorität: 19.06.1997 DE 19725951
(43) Veröffentlichungstag der Anmeldung: 23.12.1998
(73) Patentinhaber: ROBERT BOSCH GMBH, 70442 Stuttgart (DE)
(72) Erfinder: Boiger, Peter, 73249 Wernau (DE); Goesling, Bernulf, 70182 Stuttgart (DE)

(56) Entgegenhaltungen:
- DE-A- 3 843 376
- GB-A- 2 281 379
- GB-A- 2 293 438

## Beschreibung

Die Erfindung geht aus von einem Verfahren zur Brauchwasserbereitstellung in einem kombinierten System gemäß den Merkmalen des Oberbegriffs des Patentanspruchs 1. Ein derartiges Verfahren ist, zum Beispiel, aus der DE-A-4 237 136 oder der DE-A-3 843 376 bekannt.

### Stand der Technik

Zur Erhöhung des Brauchwasserkomforts derartiger Kombi- Heizgeräte ist es aus der DE 42 37 136 A l bekannt, die Umlaufmenge des Heizwassers oder die Durchflußmenge des Brauchwassers in Abhängigkeit von der Temperatur des Heizwassers zu regeln und dadurch eine Verkürzung der Aufheizzeit des Brauchwassers zu erreichen. Die Regelung erfolgt dabei durch ein thermisch gesteuertes Ventil, das entweder im Heizkreislauf angeordnet oder als Bypass zum Brauchwasserwärmetauscher geschaltet ist.

Aus DE 38 43 376 A1 ist ein Heizgerät mit einem separaten Brauchwasserspeicher bekannt, bei dem zum Aufheizen des Brauchwasserspeichers ein Wärmetauscher an einen von einer Umwälzpumpe betriebenen Primärkreis des Heizgerätes angeschlossen ist. Die Sekundärseite des Wärmetauschers ist an einen Brauchwasserladekreis angeschlossen, der von einer Ladepumpe betrieben den Brauchwasserspeicher auflädt. Die Ladepumpe des Brauchwasserladekreise wird dabei bei einer unterhalb einer festgelegten Temperatur, die am Ausgang des Wärmetauschers im Brauchwasserladekreis ermittelt wird, mit einer verminderten Förderleistung betrieben. Erfolgt eine Überschreitung der festgelegten Temperatur im Brauchwasserladekreis wird die Förderleistung der Umwälzpumpe des Primärkreises reduziert. Zum Aufheizen des Brauchwasserspeichers werden somit zwei separate Pumpen eingesetzt.

Bei dem aus GB-A-22 93 438 bekannten Verfahren zur Brauchwasserbereitung ist ebenfalls ein Brauchwasserspeicher vorgesehen, der von einem primären Heizkreis eines Heizgerätes beheizt wird. Auch hier ist zusätzlich zur Umwälzpumpe des primären Heizkreises eine Ladepumpe im sekundären Brauchwasserladekreis angeordnet.

Schließlich ist aus GB-A-22 81 379 ein Wärmetauscher für eine Brauchwasseranlage bekannt, bei dem in einem spiralförmigen Rohr das zu erwärmende Brauchwasser von einem Eingang zu einem Ausgang strömt und im Gegenstrom von einer Umwälzpumpe ein wärmabgebendes Medium innerhalb des Rohrsystems umgewälzt wird.

Die Aufgabe, die der Erfindung zugrunde liegt, besteht darin, die Aufheizzeit des Brauchwassers zu verkürzen.

Gelöst wird diese Aufgabe durch das im Patentanspruch 1 definierte Verfahren.

### Vorteile der Erfindung

Das erfindungsgemäße Regelverfahren hat den Vorteil, daß eine Verkürzung der Aufheizzeit des Brauchwassers ohne zusätzliche aufwendig in den hydraulischen Heizkreislauf einzubindende Bauteile erfolgen kann. Das erfindungsgemäße Regelverfahren erfordert lediglich den Einsatz einer drehzahlregelbaren Umlaufpumpe, die darüberhinaus auch zur Senkung des Sekundär- Energieverbrauchs von Heizgeräten und zur Reduzierung der Betriebsgeräusche im Heizkreislauf beiträgt.

Das Aufheizen des Brauchwassers im Durchlaufprinzip erfolgt auf einfache Art und Weise dadurch, daß bei einer bestimmten Temperatur des Heizungswassers die Umwälzpumpe eingeschaltet wird und die Drehzahl der Umwälzpumpe und damit die Umlaufmenge des Heizungswassers in Abhängigkeit von dessen Temperatur bis auf einen vorgebbaren Temperaturwert erhöht wird. Ist die vorgewählte Temperatur des Heizungswassers und damit die gewünschte Auslauftemperatur des Brauchwassers erreicht, wird die Umlaufpumpe während der weiteren Brauchwasserbereitstellung mit konstanter Drehzahl weiterbetrieben.

### Zeichnung

In der Zeichnung sind zwei Vorrichtungen zur Durchführung des erfindungsgemäßen Verfahrens dargestellt, die in der nachfolgenden Beschreibung näher erläutert werden. Es zeigen Figur 1 und 2 zwei schematisch dargestellte Einrichtungen zum Erhitzen von Heizungswasser und Brauchwasser und Figur 3 ein Diagramm mit der Darstellung von Temperaturverläufen des Brauchwassers während der Aufheizzeit.

### Ausführungsbeispiele

Das zur Durchführung des erfindungsgemäßen Verfahrens vorgesehene erste Ausführungsbeispiel einer Einrichtung zum Erhitzen von umlaufendem Heizungswasser und Brauchwasser weist einen in einem Heizungskreislauf angeordneten und vom Heizungswasser durchströmten Heizungswärmetauscher 10 auf, dessen Lamellen 11 von den Verbrennungsgasen eines Brenners 12 unmittelbar beaufschlagt sind. Der Heizungswärmetauscher 10 versorgt eine zwischen einem Vorlaufabschnitt 14 und einem Rücklaufabschnitt 16 des Heizungskreislaufs angeordnete Heizeinrichtung, zum Beispiel einen Heizkörper 18, mit Heizungswasser, wobei im Rücklaufabschnitt 16 eine drehzahlregelbare Umlaufpumpe 20 zum Fördern des umlaufenden Heizungswassers angeordnet ist. Für die Brauchwasserbereitung ist ein im Heizungswärmetauscher 10 angeordneter und vom Heizungswasser umströmter Brauchwasserwärmetauscher 22 vorgesehen. Eine mit dem Brauchwasserwärmetauscher 22 verbundene Brauchwasserversorgungseinrichtung speist eine oder mehrere Zapfstellen über einen Kaltwasseranschluß 24, einen eine Strömung des Brauchwassers erfassenden Sensor 26 und einen Warmwasseranschluß 28 mit Brauchwasser.

Damit für die Brauchwasserbereitung ein kontinuierlicher Wärmeübergang von im Heizungswärmetauscher 10 befindlichem Heizungswasser auf das im Brauchwasserwärmetauscher 22 strömende Brauchwasser stattfinden kann, wird über ein im Rücklaufabschnitt 16 des Heizungskreislaufs 14, 16 angeordnetes Drei-Wege-Ventil 30 und über einen Bypass 32 der Heizungskreislauf 14, 16 aufgetrennt. Der Heizungskreislauf, der vom Heizungswärmetauscher 10 über den Vorlaufabschnitt 14, Bypass 32, Drei-Wege-Ventil 30, Rücklaufabschnitt 16 und Umlaufpumpe 20 zurück zum Heizungswärmetauscher 10 führt, wird im folgenden innerer Heizkreislauf 36 genannt, während der Heizungskreislauf, der vom Heizungswärmetauscher 10 über Vorlaufabschnitt 14, Heizkörper 18 und Rücklaufabschnitt 16 zurück zum Heizungswärmetauscher 10 führt, im folgenden als äußerer Heizkreislauf 38 bezeichnet wird. Weiterhin ist am Ausgang des Heizungswärmetauschers 10 ein Temperaturfühler 40 zur Erfassung der Vorlauftemperatur des Heizungswassers angeordnet.

Der Brenner 12, die Umlaufpumpe 20, der Sensor 26, das Drei-Wege-Ventil 30 und der Temperaturfühler 40 sind über Leitungen (gestrichelt dargestellt) mit einem zentralen Steuergerät 42 verbunden.

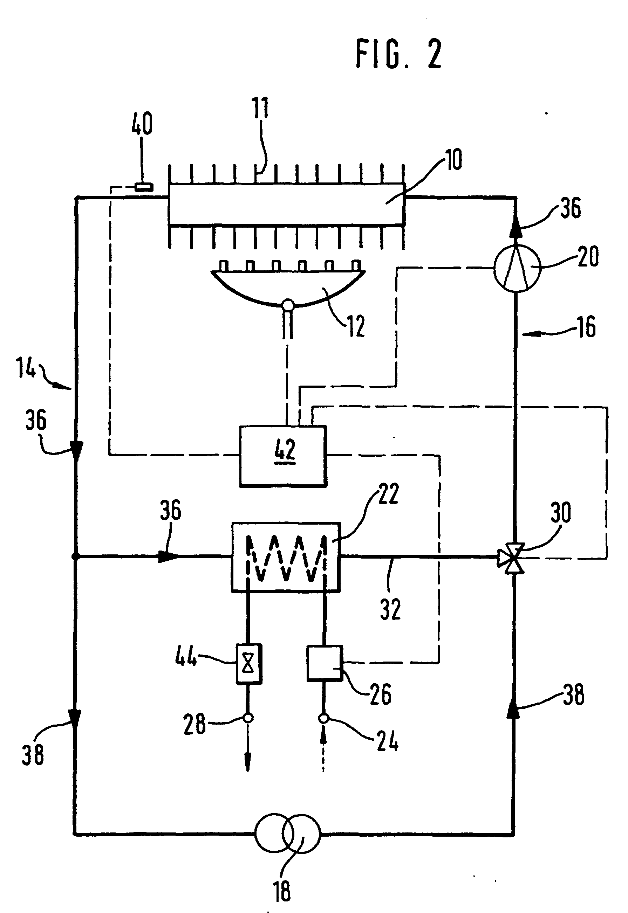

In Figur 2 ist eine zweite Ausführungsform einer Einrichtung zum Erhitzen von umlaufendem Heizungswasser und Brauchwasser dargestellt. Im Unterschied zum ersten Ausführungsbeispiel ist der Brauchwasserwärmetauscher 22 nicht im Heizungswärmetauscher 10, sondern z.B. als Plattenwärmetauscher separat in der Bypassleitung 32 angeordnet.

Die Einrichtung zum Erhitzen von umlaufendem Heizungswasser und Brauchwasser arbeitet auf folgende Art und Weise:

### a) Heizungsbetrieb

Liegt zum Beispiel über eine Raumthermostatregelung eine Wärmeanforderung an, so wird der Brenner 12 gezündet und mit Hilfe der Umwälzpumpe 20 der äußere Heizkreislauf 38 aktiviert, wobei die im äußeren Heizkreislauf 38 angeordneten Heizkörper 18 mit Heizwasser beschickt werden.

### b) Brauchwasserbereitung

Durch das Öffnen eines am Warmwasseranschluß 28 angeordneten Ventils 44, zum Beispiel das Warmwasserventil einer Einhebelmischbatterie wird mit Hilfe des Sensors 26 der Befehl zur Brauchwassererwärmung gegeben, indem ein entsprechendes Zapfvorbereitungssignal an das zentrale Steuergerät 42 abgegeben wird, daraufhin der Brenner 12 gezündet wird und die Umlaufpumpe 20 bei einer durch den Vorlauftemperaturfühler 40 erfaßten Temperatur des Heizungswassers von ca. 35 ° eingeschaltet wird. Das Drei-Wege-Ventil 30 wird so geschaltet, daß das Heizungswasser im inneren Heizkreislauf 36 zu zirkulieren beginnt.

Proportional mit der Temperaturerhöhung des Heizungswassers wird die Drehzahl der Umwälzpumpe 20 erhöht, bis die im Steuergerät 42 voreingestellte Solltemperatur für das Heizungswasser, die später die maximale Auslauftemperatur des Brauchwassers bestimmt, erreicht ist. Über den Vorlauftemperaturfühler 40 wird der Istwert der Heizwassertemperatur erfaßt und das Heizungswasser bis zur eingestellten Heizungswassertemperatur von z.B. 60° C erhitzt.

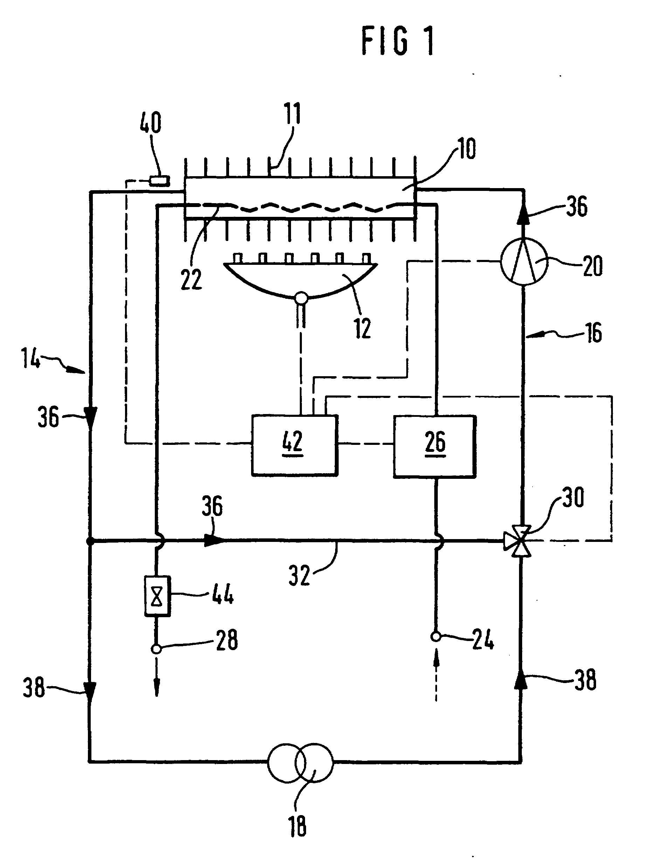

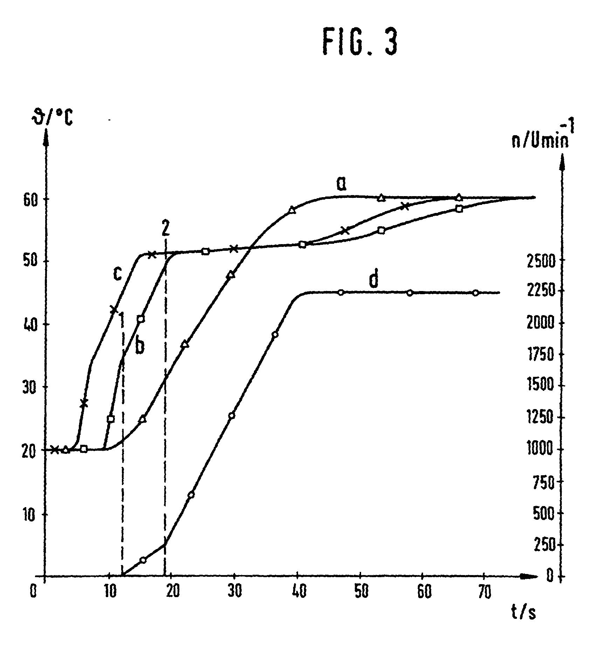

In Figur 3 sind experimentell ermittelte Temperaturverläufe des Brauchwassers von Kombi- Heizgeräten mit einer Heizleistung von 24 kW und einer Brauchwasserdurchflußmenge von 61/min aufgezeigt. Linie a stellt den Temperaturverlauf einer Brauchwassererwärmung nach einem bekannten Verfahren mit konstanter Drehzahl der Umwälzpumpe 20 dar, bei einer Ausführung der Heizeinrichtung gemäß Figur 1. Im Vergleich dazu zeigt Linie b den Temperaturverlauf des erfindungsgemäßen Regelverfahrens gemäß dem ersten Ausführungsbeispiel nach Figur 1. Dieser Vergleich macht deutlich, daß die Temperaturanstiegszeit des Brauchwassers zu Anfang der Brauchwasserbereitung wesentlich verkürzt wird, wodurch einerseits der Brauchwasserkomfort verbessert wird und andererseits durch kürzere Zapfvorgänge der Gasund Wasserverbrauch verringert wird.

Eine weitere Verkürzung der Aufheizzeit wird dadurch erreicht, daß das erfindungsgemäße Regelverfahren mit einer Heizeinrichtung gemäß dem zweiten Ausführungsbeispiel (Figur 2) durchgeführt wird. In Figur 3 ist durch die Linie c der entsprechende Temperaturverlauf dargestellt.

Linie d stellt den zeitlichen Verlauf der Drehzahlerhöhung der Umlaufpumpe 20 dar. Wie dieser Verlauf erkennen läßt, wird die Umlaufpumpe 20 gemäß dem Regelverfahren nach dem ersten Ausführungsbeispiel (Linie b) nach ca. 12s eingeschaltet, wenn das Brauchwasser eine Temperatur von ca. 35° C erreicht hat. Nachdem das Brauchwasser nach ca. 18s eine Temperatur von ca. 50° C erreicht hat, wird der Anstieg der Drehzahl der Umlaufpumpe 20 erhöht, um Siedegeräusche im Brauchwasserwärmetauscher 22 zu vermeiden. Hat das Heizungswasser und damit das Brauchwasser die voreingestellte Solltemperatur erreicht, wird danach die Umlaufpumpe 20 mit konstanter Drehzahl während der Brauchwasserzapfung weiterbetrieben.

## Patentansprüche

1. Verfahren zur Brauchwasserbereitstellung in einem kombinierten System zum Heizen von Heizkörpern und zur Brauchwasserbereitung mit einem Heizungskreislauf, wobei das Brauchwasser mittelbar über das Heizungswasser erwärmt wird und im Fall der Brauchwasserentnahme eine Umlaufpumpe im Heizungskreislauf und ein Brenner zur Erwärmung des Heizungswassers einschaltbar sind, wobei die Umlaufmenge des Heizungswassers in Abhängigkeit von dessen Temperatur geregelt wird, **dadurch gekennzeichnet, daß** der Heizungskreislauf einen äußeren Heizkreislauf (38) und einen inneren Heizkreislauf (36) aufweist, dass der äußere Heizkreislauf (38) die Heizkörper(18) enthält und der innere Heizkreislauf (36) über einen Bypass (32) die Heizkörper (18) umgehend verläuft, daß zur Brauchwassererwärmung der Brenner (12) gezündet, die Umlaufpumpe (20) bei einer erfaßten Temperatur des Heizungswassers eingeschaltet und der Bypass (32) geöffnet wird, so daß das Heizungswasser im inneren Heizkreislauf (36) zu zirkulieren beginnt, und daß die Drehzahl der Umlaufpumpe (20) in Abhängigkeit von der Temperatur des Heizungsoder des Brauchwassers geregelt wird.

2. Verfahren nach Anspruch 1, **dadurch gekennzeichnet, daß** die Drehzahl der Umlaufpumpe (20) bis zum Erreichen einer vorgebbaren Temperaturgrenze proportional zur Temperatur des durch den Brenner (12) erhitzten Heizungs- bzw. Brauchwassers erhöht wird.

## Claims

1. Method for providing service water in a combined system for heating radiators and for treating service water with a heating circuit, the service water being heated indirectly by means of the heating water, and in the event of service water being removed, it being possible for a recirculation pump in the heating circuit and a burner for heating the heating water to be switched on, the circulated quantity of heating water being controlled as a function of its temperature, **characterized in that** the heating circuit includes an outer heater circuit (38) and an inner heater circuit (36), **in that** the outer heater circuit (38) includes the radiators (18) and the inner heater circuit (36) bypasses the radiators (18) via a bypass (32), **in that** to heat service water the burner (12) is ignited, the recirculation pump (20) is switched on at a recorded temperature of the heating water and the bypass (32) is opened, so that the heating water starts to circulate in the inner heater circuit (36), and **in that** the rotational speed of the recirculation pump (20) is controlled as a function of the temperature of the heating water or of the service water.

2. Method according to Claim 1, **characterized in that** the rotational speed of the recirculation pump (20) is increased proportionally to the temperature of the service or heating water heated by the burner (12) until a predeterminable temperature limit is reached.

## Revendications

1. Procédé de préparation d'eau sanitaire dans un système combinant le chauffage du corps de chauffe et la mise à disposition d'eau sanitaire au moyen d'un circuit de chauffage, l'eau sanitaire étant chauffée directement par l'eau de chauffage et dans le cas où de l'eau sanitaire est soutirée, une pompe de circulation montée sur le circuit de chauffage et un brûleur servant à chauffer l'eau de chauffage peuvent être mis en route, le débit de circulation de l'eau de chauffage étant réglé en fonction de la température de cette eau,
**caractérisé en ce que**
le circuit de chauffage comprend un circuit externe de chauffage (38) et un circuit interne de chauffage (36), le circuit externe (38) comprend les corps de chauffage (18) et le circuit interne (36) contourne les corps de chauffage (18) par un by-pass (32)
pour échauffer l'eau sanitaire, on allume le brûleur (12), on enclenche la pompe de circulation (20) quand une température d'eau sanitaire est détectée, et le by-pass (32) est ouvert de sorte que l'eau de chauffage commence à circuler dans le circuit interne d'eau de chauffage (36), la vitesse de rotation de la pompe de circulation (20) étant réglée en fonction de la température de l'eau de chauffage ou de l'eau sanitaire.

2. Procédé selon la revendication 1,
**caractérisé en ce que**
la vitesse de rotation de la pompe de circulation (20), jusqu'à ce que soit atteinte une température limite prédéfinie, est augmentée proportionnellement à la température de l'eau de chauffage ou sanitaire échauffée par le brûleur (12).
